# EUROPÄISCHE PATENTSCHRIFT

(11) **EP 0 633 167 B1**
(45) Veröffentlichungstag und Bekanntmachung des Hinweises auf die Patenterteilung: **09.10.1996**
(21) Anmeldenummer: 94109939.2
(22) Anmeldetag: 28.06.1994
(51) Int. Cl.: B60R 9/045, B60R 9/05

(54) **Lastenträger für Kraftfahrzeuge**
Luggage carrier for vehicles
Porte-bagages pour véhicules

(30) Priorität: 10.07.1993 DE 4323097
(43) Veröffentlichungstag der Anmeldung: 11.01.1995
(73) Patentinhaber: Happich Fahrzeug-Dachsysteme GmbH, D-42285 Wuppertal (DE)
(72) Erfinder: Lumpe, Karl-Heinz, D-42279 Wuppertal (DE); Flüss, Gerrit, D-42105 Wuppertal (DE)

(56) Entgegenhaltungen:
- DE-A- 3 814 800
- DE-A- 3 909 853
- DE-U- 9 109 226
- US-A- 4 972 983

## Beschreibung

Die Erfindung bezieht sich auf einen Lastenträger für Kraftfahrzeuge mit zwei zu beiden Fahrzeugseiten am Fahrzeugdach längs verlaufenden Schienen oder Relingrohren und zwei an den Schienen oder Relingrohren befestigten Querstäben, die jeweils einen nach oben offenen mit Hinterschneidungen zur Aufnahme von Anbauteilen ausgebildeten Längskanal aufweisen und die verschiebbar entlang der Länge der Schienen oder Relingrohre einstellbar sind, um einen relativ großen wählbaren Abstand voneinander einzunehmen, wenn in der Gebrauchslage eine Last darauf unterzubringen ist und um in der Nichtgebrauchslage, wenn keine Last zu transportieren ist, keinen oder nur einen geringen Abstand voneinander einzunehmen.

Bei Lastenträgern der genannten Art ist es bekannt, die Querstäbe ständig am Fahrzeug mitzuführen, sie also in der Gebrauchslage an den Schienen oder Relingrohren zu belassen. Nachteilig dabei ist, daß sich störende Windgeräusche bemerkbar machen, daß sich der Luftwiderstand im Fahrbetrieb erhöht und daß es mit der Zeit zur starken Verschmutzung der Querstäbe kommt. Es ist daher auch bekannt, die Querstäbe nur im Bedarfsfall zu montieren und sie in der übrigen Zeit im Fahrzeug mitzuführen. Diese Maßnahme wird einerseits als recht lästig empfunden und bereitet auch gewisse Probleme hinsichtlich des Platzbedarfs für die Unterbringung.

Um einen geeigneten Aufbewahrungsort für die Querstäbe zu finden, ist bei einer durch die DE- 38 14 800 A1 bekanntgewordenen Anordnung ein als Hohlteil ausgebildeter Spoiler vorgesehen, der in seinem von außen durch eine verschließbare Öffnung zugänglichen Innenraum eine Einrichtung zum Aufbewahren der nicht benötigten Querstäbe aufweist. Bei dieser bekannten Lösung verbleibt jedoch der Nachteil, die Querstäbe stets montieren und demontieren zu müssen.

Bei einer anderen, durch die DE- 39 14 460 C2 bekanntgewordenen Lösung, von der die vorliegende Erfindung ausgeht, bleiben die Querstäbe ständig am Fahrzeug. Dabei umfassen die Querstäbe einen vorderen und einen hinteren Stab, welche verschiebbar entlang von Schienen zwischen einer Abstandsposition und einer aneinanderliegenden Position einstellbar sind. Die Querstäbe können am rückwärtigen Fahrzeugende in Kontakt miteinander gebracht werden, wenn keine Last transportiert wird, um die Aerodynamik des Fahrzeugs zu verbessern. Bei Kontakt zwischen dem vorderen und hinteren Querstäben können diese einen aerodynamischen Flügel für das Fahrzeug bilden. Bei dieser bekannten Anordnung wird zwar das lästige Montieren und Demontieren der Querstäbe vermieden, jedoch kann nicht ausgeschlossen werden, daß es bei dieser Anordnung zu Pfeifgeräuschen beim Fahrbetrieb kommt. Ein Schutz gegen Verschmutzen der Querstäbe fehlt völlig, so daß sich zudem mit der Zeit die Längskanäle in den Querstäben mit Schmutzpartikeln zusetzen können.

Die vorliegende Erfindung zielt darauf ab, einen Lastenträger der eingangs genannten Art zur Verfügung zu stellen, bei dem die Querstäbe im ständigen Kontakt mit den Schienen oder Relingrohren verbleiben können und bei dem dennoch sichergestellt ist, daß die Querstäbe nicht zu einer Geräuschbildung beitragen und insbesondere auch nicht verschmutzen können.

Erfindungsgemäß wird dieses Ziel dadurch erreicht, daß für die Querstäbe in der Nichtgebrauchslage eine beide Querstäbe übergreifende Abdeckprofilleiste vorgesehen ist, die mit an ihrer Rückseite angeordnete Längsrippen formschlüssig mit den Querstäben verbunden und dadurch an den Querstäben gehalten ist.

Eine Abdeckprofilleiste, die einfach und kostengünstig herzustellen ist, kann problemlos an den Querstäben z. B. durch Aufschieben angebracht werden und bereitet auch keine besonderen Unterbringungsprobleme im Fahrzeug, wenn sich die Querstäbe in der zweckgebundenen Gebrauchsstellung befinden. Andererseits bietet die Abdeckprofilleiste besondere Vorteile, denn sie ermöglicht es, die Querstäbe stets an den Schienen oder Relingrohren zu belassen, sie vermeidet eine störende Geräuschbildung im Fahrbetrieb und ein Verschmutzen der Querstäbe und sie verbessert zudem das gute Aussehen des Lastenträgers zusätzlich.

In Weiterbildung der Erfindung ist bevorzugt vorgesehen, daß die Abdeckprofilleiste als aerodynamischer Flügel bzw. als Spoiler ausgebildet ist. Hierdurch vermag die Abdeckprofilleiste ohne besonderen Kostenaufwand eine Zusatzfunktion zu erfüllen, indem sie zur Verbesserung der Aerodynamik eines Fahrzeugs beiträgt.

Die Abdeckprofilleiste besteht zweckmäßigerweise aus Gummi oder Kunststoff. Dabei kann sie grundsätzlich als Spritzgußteil hergestellt sein, obgleich sie, insbesondere aus Kostengründen, bevorzugt aus dem Abschnitt eines Strangpreßprofils besteht.

Die Längsrippen der Abdeckprofilleiste weisen einen verdickten, formschlüssig in die Längskanäle der Querstäbe eingreifenden Kopf auf. Alternativ oder zusätzlich kann vorgesehen sein, daß die Abdeckprofilleiste eine zwischen den Querstäben geführte Längsrippe mit einem verdickten Kopf am Rippenende aufweist.

Eine Längsverschiebung der Abdeckprofilleiste kann in einfacher Weise dadurch verhindert werden, daß die Längsrippen derselben an den Stirnenden der Abdeckprofilleiste jeweils eine den Eingriff eines Schließriegels ermöglichende Ausklinkung aufweisen.

Ausführungsbeispiele der Erfindung werden im folgenden anhand der Zeichnung näher erläutert. Es zeigen:
- Fig. 1: den vertikalen Schnitt durch zwei in der Nichtgebrauchslage befindliche Querstäbe, die von einer, eine rückseitige Längsrippe aufweisenden Abdeckprofilleiste übergriffen sind,
- Fig. 2: den vertikalen Schnitt durch zwei in der Nichtgebrauchslage befindliche Querstäbe, die von einer, drei rückseitige Längsrippen aufweisenden Abdeckprofilleiste übergriffen sind,
- Fig. 3: den vertikalen Schnitt durch zwei in der Nichtgebrauchslage befindliche Querstäbe, die von einer, drei rückseitige Längsrippen aufweisenden Abdeckprofilleiste übergriffen sind, wobei die Abdeckprofilleiste als Spoiler ausgebildet ist,
- Fig. 4: einen Schnitt, etwa folgend der Linie IV - IV in Fig. 3 und
- Fig. 5: eine Dachreling mit Stützfüßen und Relingrohren.

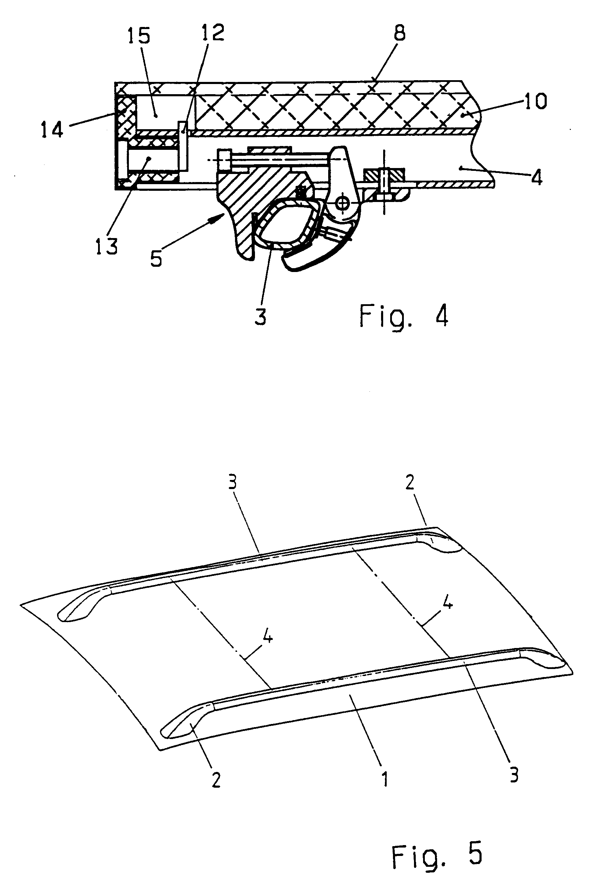

Fig. 5 läßt das Dachblech 1 eines Fahrzeugs mit einem darauf angeordneten Dachlastenträger erkennen. Der Dachlastenträger wird aus zwei Dachrelings, bestehend aus Stützfüßen 2 und Relingsrohren 3 sowie aus in Fig. 5 lediglich strichpunktiert angedeuteten Querstäben 4, die an den Relingrohren 3 mit einer in Fig. 4 gezeigten Befestigungsvorrichtung 5 befestigt sind, gebildet. Die Dachrelings erstrecken sich zumindest annähernd parallel zueinander und verlaufen in Fahrtrichtung des Fahrzeugs. Ein Dachlastenträger kann auch gebildet werden durch nicht gezeigte, die Relingrohre 3 ersetzende Längsschienen, in die die Querstäbe 4 tragende Stützfüße längsverschiebbar und in beliebiger Lage arretierbar eingreifen. Einen solchen Dachlastenträger zeigt beispielsweise die weiter oben erwähnte DE- 39 14 460 C2.

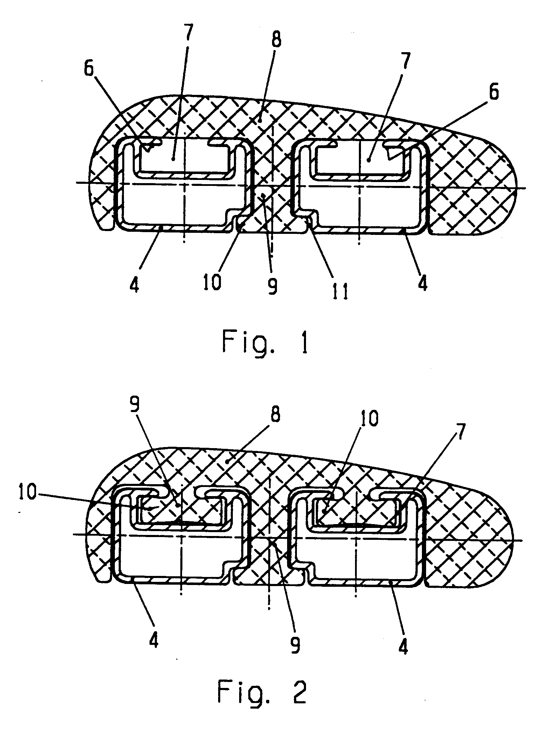

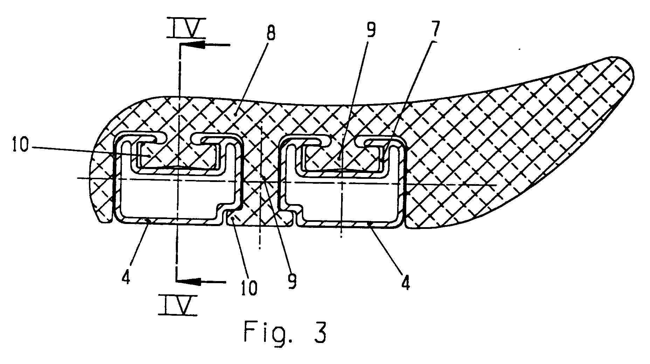

Bei dem neuen Lastenträger für Kraftfahrzeuge mit zwei zu beiden Fahrzeugseiten am Fahrzeugdach (Dachblech 1) längs verlaufenden Schienen oder Relingrohren 3 und zwei an den Schienen oder Relingrohren 3 befestigten Querstäben 4, die jeweils einen nach oben offenen mit Hinterschneidungen 6 zur Aufnahme von nicht gezeigten Anbauteilen ausgebildeten Längskanal 7 aufweisen und die verschiebbar entlang der Länge der Schienen oder Relingrohre 3 einstellbar sind, um einen relativ großen wählbaren Abstand voneinander einzunehmen (vgl. Fig. 5), wenn in der Gebrauchslage eine Last darauf unterzubringen ist und um in der Nichtgebrauchslage, wenn keine Last zu transportieren ist, keinen oder nur einen geringen Abstand voneinander einzunehmen (vgl. Fig. 1 bis 3), besteht die Besonderheit darin, daß für die Querstäbe 4 in der Nichtgebrauchslage eine beide Querstäbe 4 übergreifende Abdeckprofilleiste 8 vorgesehen ist. Die Abdeckprofilleiste 8 weist an ihrer Rückseite sitzende Längsrippen 9 auf, die am freien Ende einen verdickten Kopf 10 tragen. Die Abdeckprofilleiste 8 weist lediglich eine rückseitige zwischen den Querstäben 4 geführte Längsrippe 9 mit einem verdickten Kopf 10 am Rippenende auf, welcher die Querstäbe 4 hintergreift. Eine jeweilige Einziehung 11 in den Querstäben 4 sorgt dabei für einen bündigen Abschluß. In den Fig. 2 und 3 ist die Abdeckprofilleiste 8 jeweils mit drei rückseitigen Längsrippen 9 mit verdickten Kopf 10 ausgebildet. Die zusätzlichen Längsrippen 9 mit Kopf 10 greifen formschlüssig in die Längskanäle 7 der Querstäbe 4 ein und bewirken damit eine besonders zuverlässige Festlegung der Abdeckprofilleiste 8 an den Querstäben 4.

Die Abdeckprofilleiste 8, die aus dem Abschnitt eines Strangpreßprofils aus Gummi oder Kunststoff bestehen kann, deckt die Querstäbe 4 zumindest vorderseitig, rückseitig und kopfseitig ab. Eine unterseitige Abdeckung ist zudem möglich.

Der Querschnitt der Abdeckprofilleiste kann an sich beliebig sein, jedoch empfiehlt es sich, auf eine strömungsgünstige Formgebung zu achten. Eine besonders strömungsgünstige Formgebung zeigt die Abdeckprofilleiste 8 nach Fig. 3, die hier als Spoiler ausgebildet ist. Die aerodynamisch günstige Form muß jeweils ermittelt bzw. bestimmt werden.

Zur Montage ist die Abdeckprofilleiste 8 lediglich von einem Stirnende der Querstäbe 4 aus auf diese aufzuschieben. Für eine Verschiebesicherung in Längsrichtung kann der Schließriegel 12 einer Schließvorrichtung 13, die in einem stirnseitigen Abschlußelement 14 der Querstäbe 4 sitzt, herangezogen werden. In den Längsrippen 9 ist hierfür eine Ausklinkung 15 vorzusehen.

## Patentansprüche

1. Lastenträger für Kraftfahrzeuge mit zwei zu beiden Fahrzeugseiten am Fahrzeugdach (1) längs verlaufenden Schienen oder Relingrohren (3) und zwei an den Schienen oder Relingrohren (3) befestigten Querstäben (4), die jeweils einen nach oben offenen mit Hinterschneidungen (6) zur Aufnahme von Anbauteilen ausgebildeten Längskanal (7) aufweisen und die verschiebbar entlang der Länge der Schienen oder Relingrohre (3) einstellbar sind, um einen relativ großen wählbaren Abstand voneinander einzunehmen, wenn in der Gebrauchslage eine Last darauf unterzubringen ist und um in der Nichtgebrauchslage, wenn keine Last zu transportieren ist, keinen oder nur einen geringen Abstand voneinander einzunehmen, dadurch gekennzeichnet, daß für die Querstäbe (4) in der Nichtgebrauchslage eine beide Querstäbe (4) übergreifende Abdeckprofilleiste (8) vorgesehen ist, die mit an ihrer Rückseite angeordnete Längsrippen (9) formschlüssig mit den Querstäben (4) verbunden und dadurch an den Querstäben (4) gehalten ist.

2. Lastenträger nach Anspruch 1, dadurch gekennzeichnet, daß die Abdeckprofilleiste (8) als aerodynamischer Flügel bzw. Spoiler ausgebildet ist.

3. Lastenträger nach Anspruch 1 oder 2, dadurch gekennzeichnet, daß die Abdeckprofilleiste (8) aus Gummi oder Kunststoff besteht.

4. Lastenträger nach wenigstens einem der Ansprüche 1 bis 3, dadurch gekennzeichnet, daß die Abdeckprofilleiste (8) aus dem Abschnitt eines Strangpreßprofils besteht.

5. Lastenträger nach wenigstens einem der Ansprüche 1 bis 4, dadurch gekennzeichnet, daß die Längsrippen (9) der Abdeckprofilleiste (8) einen verdickten, formschlüssig in die Längskahäle (7) der Querstäbe (4) eingreifenden Kopf (10) aufweisen.

6. Lastenträger nach wenigstens einem der Ansprüche 1 bis 5, dadurch gekennzeichnet, daß die Abdeckprofilleiste (8) eine zwischen den Querstäben (4) geführte Längsrippe (9) mit einem verdickten Kopf (10) am Rippenende aufweist.

7. Lastenträger nach wenigstens einem der Ansprüche 1 bis 6, dadurch gekennzeichnet, daß die Längsrippen (9) der Abdeckprofilleiste (8) an den Stirnenden derselben jeweils eine den Eingriff eines Schließriegels (12) ermöglichende Ausklinkung (15) aufweisen.

## Claims

1. A rack for vehicles with two on both sides of the vehicle roof (1) longitudinally positioned rails or tubular handrails (3) and with two transverse rods (4), which are fixed to the rails or tubular handrails (3), the rods being provided with a longitudinal upward open channel (7) with undercuts (6) for the fitting of components and the rods being movable and adjustable in the longitudinal direction of the rails or tubular handrails (3), in order to be selectively fixed at a relative great distance from one another, in the position of use when a weight is to be put on them, and in order to be positioned one against the other or at a short distance in the position of non-use, when there is no weight to be transported, characterized in that when the transverse rods (4) are in the position of non-use there is provided a formed profile cover (8), which is in material connection with the transverse rods (4) and therefore is held on the transverse rods (4) by means of longitudinal ribs (9) which are provided on their backside.

2. A rack according to claim 1, characterized in that the formed profile cover (8) is formed as an aerodynamic wing or spoiler.

3. A rack according to claim 1 or 2, characterized in that the material of the formed profile cover (8) is rubber or plastic.

4. A rack according to at least one of the claims 1 to 3, characterized in that the formed profile cover (8) is a section of an extruded profile.

5. A rack according to at least one of the claims 1 to 4, characterized in that the longitudinal ribs (9) of the formed profile cover (8) are provided with a thicker head (10) in material connection with the longitudinal channels (7) of the transverse rods (4).

6. A rack according to at least one of the claims 1 to 5, characterized in that the formed profile cover (8) is provided with a longitudinal rib (9) between the transverse rods (4) which comprises a thicker head (10) at the end of the rib.

7. A rack according to at least one of the claims 1 to 6, characterized in that the longitudinal ribs (9) of the formed profile cover (8) are provided at their front ends with a notch (15) which allows the insertion of a closure bolt (12).

## Revendications

1. Porte-bagages pour véhicules comportant deux rails ou tubes (3) des mains courantes s'étendant aux deux côtés du véhicule en direction longitudinale le long du toit (1) du véhicule, et deux tiges transversales (4) fixées aux rails ou tubes (3) des mains courantes, lesquelles présentent respectivement un canal longitudinal (7) de forme ouverte vers le haut et pourvu d'une contre-dépouille (6) pour la réception d'éléments applicables, et lesquelles sont réglables par déplacement sur la longueur des rails ou des tubes (3) des mains courantes, pour prendre une distance réciproque susceptible de sélection et relativement large, quand à la position d'utilisation on doit y déposer une charge, et pour ne pas prendre une distance réciproque ou prendre une distance réciproque très réduite, quand à la position de non utilisation aucune charge ne doit être transportée, caractérisé en ce que pour les tiges transversales (4) à la position de non utilisation on prévoit une latte profilée de couverture (8), laquelle engage à la partie supérieure les deux tiges transversales (4), est reliée au moyen d'un accouplement géométrique, par des nervures longitudinales (9) disposées sur son côté arrière, aux tiges transversales (4) et, par effet de ceci, est retenue sur les tiges transversales (4).

2. Porte-bagages selon la revendication 1, caractérisé en ce que la latte profilée de couverture (8) est en forme d'aileron aérodynamique ou respectivement de spoiler.

3. Porte-bagages selon la revendication 1 ou 2, caractérisé en ce que la latte profilée de couverture (8) est en caoutchouc ou en matière synthétique.

4. Porte-bagages selon une ou plusieurs des revendications 1 à 3, caractérisé en ce que la latte profilée de couverture (à) est formée d'une portion d'un profilé extrudé.

5. Porte-bagages selon une ou plusieurs des revendications 1 à 4, caractérisé en ce que les nervures longitudinales (9) de la latte profilée de couverture (8) présentent une tête élargie (10), laquelle s'engage par accouplement géométrique dans le canal longitudinal (7) des tiges transversales (4).

6. Porte-bagages selon au moins une des revendications 1 à 5, caractérisé en ce que la latte profilée de couverture (8) présente une nervure longitudinale (9), guidée entre les tiges transversales (4), prévoyant une tête élargie (10) à l'extrémité de la nervure.

7. Porte-bagages selon au moins une des revendications 1 à 6, caractérisé en ce que les nervures longitudinales (9) de la latte profilée de couverture (8) présentent, respectivement aux extrémités de face de celles-ci, une encoche (15) permettant l'engagement d'un verrou de fermeture (12).
